Europäisches Patentamt

European Patent Office

Office européen des brevets

(11) Veröffentlichungsnummer: **0 236 941 B1**

# EUROPÄISCHE PATENTSCHRIFT

(45) Veröffentlichungstag der Patentschrift: 02.10.91

(51) Int. Cl.⁵: **B23K 37/04**, B23K 9/02

(21) Anmeldenummer: 87103106.8

(22) Anmeldetag: 05.03.87

(54) Schweissvorrichtung für aneinanderstossende Rohrenden.

(30) Priorität: 12.03.86 CA 502712
09.05.86 DE 3615575

(43) Veröffentlichungstag der Anmeldung:
16.09.87 Patentblatt 87/38

(45) Bekanntmachung des Hinweises auf die
Patenterteilung:
02.10.91 Patentblatt 91/40

(84) Benannte Vertragsstaaten:
AT BE CH DE ES FR GB GR IT LI LU NL SE

(56) Entgegenhaltungen:
EP-A- 0 159 897          FR-A- 1 090 052
GB-A- 2 067 945          US-A- 2 887 972
US-A- 4 216 896          US-A- 4 483 477

AUTOMATIC WELDING, Band 9, September
1962, Seiten 63,64, Welding Institute, Cambridge, GB; V.E. REMIZOV et al.: "Detachable
backing rings for the automatic welding of
containers from one side"

(73) Patentinhaber: **Hahn, Helmut**
**4096 Glanford Avenue**
**Victoria British Columbia V8Z 4A2(CA)**

(72) Erfinder: **Hahn, Helmut**
**4096 Glanford Avenue**
**Victoria British Columbia V8Z 4A2(CA)**

(74) Vertreter: **Goddar, Heinz J., Dr.**
**FORRESTER & BOEHMERT Widenmayerstras-**
**se 4/I**
**W-8000 München 22(DE)**

**Beschreibung**

Die Erfindung betrifft eine Schweißvorrichtung für eine Verwendung bei einer Verschweißung von aneinanderstoßenden Rohrenden (FR-A-1 090 052) sowie eine Kombination derselben mit einem Unterlegelement (EP-A-0 159 897) nach den Oberbegriffen des Anspruches 1 bzw. 16.

Bei der Verbindungsverschweißung von kreisförmigen Rohrverbindungen, von außerhalb der Rohre, ist es notwendig, daß das Schweißmaterial leicht über die innere Oberfläche des Rohres bzw. der Rohre vordringt, um die aneinanderstoßenden Rohrenden vollständig miteinander zu verbinden. Die Größe und die Konsistenz der inneren Schweißdurchdringung, die auch als Wurzelbett bezeichnet wird, ist besonders kritisch bei Röhren, die zum Transport komprimierter Flüssigkeiten und Gase gedacht sind.

Eine schweißvorrichtung nach den Oberbegriff des Anspruches 1 ist aus der FR-A-1 090 052 bekannt.

Die EP-A-0 159 897 beschreibt eine Kombination einer Schweißvorrichtung mit einem bogenförmigen Ringsegment, das auf einer Halteplatte angebracht und mittels einer Feder vorgespannt ist, für eine Drehbewegung. Die Begrenzungsflächen des bogenförmigen Ringsegments sind schiefwinklig. Mehrere solcher Mechanismen sind an Klemmteilen einer inneren Klammer derart befestigt, daß sie mit derselben vorund zurückbewegt werden können.

Im stand der Technik sind eine Anzahl von weiteren Unterlegsyste men bekannt (vergleiche beispielsweise US-A 4 177 914, 2 691 952, 1 964 926, 4 165 831 und 4 285 458), die dazu ausgelegt sind, eine innere Unterlegung quer über den Verbindungsspalt zu ergeben, um das geschmolzene Schweißmaterial aufzunehmen und so eine Unterstützung zu geben bei einer Ausbildung eines ununterbrochenen, konsistenten inneren Schweißprofils bzw. Schweißquerschnittes. Die meisten der im Stand der Technik bekannten Systeme verbinden die Fähigkeit, zu unterlegen, mit Mitteln, die zugeordneten Röhrenenden in kreisförmige und axiale Ausrichtung miteinander zu bringen. Die meisten dieser Apparate ergeben aber eine unvollständige Schweißunterlegung, wegen mechanischer und/oder geometrischer Schwierigkeiten, die mit einer Zusammenlegung oder einer Einziehung einer vollständigen kreisförmigen Unterlegungsanordnung in einen begrenzten Raum verbunden sind. Diese Schwierigkeiten nehmen zu entsprechend zu einer Abnahme des Röhrendurchmessers.

Wegen ihrer relativ komplexen und teilweise umständlichen mechanischen Konstruktion erscheint keines dieser Systeme geeignet, insbesondere bei mittleren und kleineren Rohrdurchmessern (innere Durchmesser 400 bis 70 mm bzw. 20" bis 3") verwendet zu werden, und insbesondere sind diese bekannten Systeme dann nicht geeignet, wenn es sich um gekrümmte Rohrkomponenten handelt, sowie etwa bei Krümmern und 180°-Bogen, die etwa mit geraden Rohrlängen zu verbinden sind. Eine mögliche Unterbrechung oder andere Ungleichförmigkeiten des Schweißprofils im Inneren des Rohres, verursacht durch eine unvollständige Unterlegung, bildet einen immer größeren Bereich der gesamten Schweißlänge bei abnehmendem Rohrdurchmesser. Darüber hinaus ist die große Mehrzahl der Rohrschweißdefekte auf Wurzelfehler zurückzuführen.

Im Hinblick auf den vorbeschriebenen Stand der Technik ist der hier beschriebenen Erfindung die Aufgabe gestellt, eine Schweißvorrichtung, wie sie im Stand der Technik bekannt ist, so auszugestalten und weiterzubilden, daß insbesondere auch bei kleineren Rohrdurchmessern eine vollständige Unterlegung der Schweißnaht möglich ist und daß die Vorrichtung insgesamt möglichst einfach aufgebaut ist, bei gleichzeitig möglichst universellen Anwendungsmöglichkeiten.

Diese Aufgabe ist gemäß der Lehre der Erfindung zunächst und im wesentlichen durch eine Schweißvorrichtung (in Kombination mit einem Unterlegelement) nach Anspruch 1 bzw. 16 gelöst.

Mit anderen Worten sind bei der Schweißvorrichtung gemäß der Erfindung die Unterlegelemente von der Druckeinrichtung prinzipiell vollkommen getrennt. Die Druckeinrichtung, bzw. die Druckstempel der Druckeinrichtungen kommen lediglich, wenn sie entsprechend ausgefahren werden, zur Anlage an die Unterlegelemente, um sie einerseits im Inneren der Rohre zu haltern und andererseits an die Rohre in der erforderlichen Weise anzupressen. Ein eigener Mechanismus, wie er bei allen sonstigen im Stand der Technik bekannten derartigen Schweißvorrichtungen vorhanden ist, um die Unterlegelemente zum Einführen der Schweißvorrichtung in eine derartige Rohrverbindung oder zum Herausnehmen daraus, zusammenzuziehen oder zusammenzulegen, entfällt damit bei der erfindungsgemäßen Schweißvorrichtung vollkommen. Sie ist dadurch nicht nur in mechanischer Hinsicht erheblich vereinfacht, sondern ermöglicht darüber hinaus auch eine sehr leichte Anpassung an unterschiedliche Rohrdurchmesser. Ohne daß über einen gewissen (zumindest ca. 3 bis 4" bzw. 75 bis 100 mm) Bereich eine Änderung oder ein Austausch der Druckeinrichtung notwendig ist, kann die Druckeinrichtung mit unterschiedlich gekrümmten, für unterschiedliche Rohrdurchmesser gedachte, Halterungsschuhen (wie sie nachstehend noch im einzelnen beschrieben sind) und Unterlegelementen zusammenwirken.

Ein Hauptziel der hier beschriebenen Erfindung ist es auch, eine vollständige und ununterbrochene Unterlegung wie auch eine überlegene Wurzelbettqualität zu ergeben, verbunden mit einer ununterbrochenen Unterlegung, was wesentlich ist für eine Anwendung des sogenannten GMAW-Schweißverfahrens (Gasschutzschweißung bzw. speziell Dünndrahtgasschweißung), was ohne Schweißunterlage nicht durchführbar ist, da das Schmelzbad relativ kräftig ist. Bei der Verewendung von lediglich drei Unterlegelementen, wie das nachstehend im Zusammenhang mit einer bevorzugten Ausführungsform noch im einzelnen erläutert ist, ist insbesondere ein Ziel, eine solche Gestaltung und Rückziehfolge zu ergeben, daß die Möglichkeit, daß sich die Unterlegelemente durch die Schweißmaterialeinlagerung verklemmen oder verkeilen, ausgeschaltet ist.

Gemäß einer bevorzugten Ausführungsform ist des weiteren zunächst vorgesehen, daß die Druckstempel oder sonstige Elemente, die auf die Unterlegelemente einwirken, die Unterlegelemente formschlüssig erfassen. Die Unterlegelemente bestehen aus einer Mehrzahl von gekrümmten Unterlegteilen, die aus einer speziellen Kupferlegierung oder einem wärmefesten Keramikmaterial hergestellt sind und Krümmungen aufweisen, die denen der Rohre oder Rohrkomponenten entsprechen. Sie decken den Schweißbereich vollständig ab. Die bewegbaren Druckstempel oder dergleichen Elemente der Druckeinheit dienen zunächst zur Halterung und Erfassung der Unterlegelemente und zu einer radialen Bewegung, in und außer Kontakt mit der Innenoberfläche der Röhren. Die Druckeinheit besitzt hierfür entsprechende Mittel, um die radiale Bewegung zu bewirken, nämlich beispielsweise einen doppelt wirkenden Fluidzylinder, der eine radiale Kraft ausübt, um mit der Druckstempelanordnung, oder aber auch den, weiter unten noch im einzelnen erläuterten,Halterungsschuhen zusammenzuwirken, wobei seitlich Führungen vorgesehen sind, parallel zu der Längsachse des Zylinders, zur Aufnahme von Führungsstangen des Druckstempels oder des Halterungsschuhs, die frei sich hinein-und herausbewegen können. Im übrigen sind in seitlicher Erstreckung zu dem Fluidzylinder und abschließend mit der oberen Oberfläche des Fluidzylinders zwei Aufnahmen für die Einführung von Herausziehkabeln für die Unterlegelemente vorgesehen. Der Zylinder besitzt im übrigen auch Mittel für eine Aufnahme einer - weiter unten noch im einzelnen erläuterten - Lösestange.

Demgemäß ist es ein weiteres Ziel der hier beschriebenen Erfindung, ein Gerät mit nur einem, doppelt wirkendem Fluidzylinder anzugeben, das in der Lage ist, die wesentliche Funktion auszuführen, die sonst durch eine Vielzahl von hydraulischen Vorrichtungen und anderen zusätzlichen Mitteln ausgeführt wird. Das sich so ergebende Gerät weist daher eine sehr wirtschaftliche Konstruktion und Anordnung auf und ist betrieblich sehr zuverlässig.

Die zuvor erläuterten Maßnahmen erlauben es jedenfalls, daß das Gerät bis hinab zu Röhren mit einem Innendurchmesser von 75 mm (3") verwendet wird. Bei Röhren mit einem größeren Innendurchmesser als 240 mm (10") empfiehlt es sich, zwei weitere kleine Fluidzylinder in einer um 90° seitlichen Anordnung in Bezug auf den Hauptfluidzylinder vorzusehen, für zusätzliche radiale Kräfte, ohne daß das zuvor erläuterte allgemeine Prinzip in seiner Einfachheit verletzt wird.

Wie im übrigen schon angesprochen, ist es auch ein Ziel der hier beschriebenen Erfindung, die Anzahl von Geräten herabzusetzen, die benötigt werden für unterschiedliche Rohrdurchmesser, indem austauschbare Druckstempel oder dergleichen Teile, die auf die Unterlegelemente einwirken, verwendet werden, bei derselben Druckeinheit, bzw. bei derselben hydraulischen Zylindereinheit.

Bei einer erfindungsgemäßen Schweißvorrichtung ist bevorzugt vorgesehen, daß zumindest drei einzelne Unterlegelemente vorhanden sind. Diese Unterlegelemente sind weiterhin bevorzugt so ausgestaltet, daß mindesten ein Unterlegelement an seinen Seiten in Umfangsrichtung keilartig abgeschrägt ist und daß die angrenzend mit diesem Unterlegement zusammenwirkenden Unterlegemente entsprechend abgeschrägt sind. Dies ermöglicht einerseits eine lückenlose Unterlegung der Schweißnaht, andererseits aber, bei einer gewissen Zurücknahme des beidseitig an seinen Seiten abgeschrägten Unterlegelementes, eine Umfangsverkleinerung der Schweißvorrichtung und so ein leichtes Heraus- und Hineinbewegen der Schweißvorrichtung in die angrenzenden Rohrenden.

Die Schweißvorrichtung weist also drei Unterlegsegmente unterschiedlicher Länge auf, die den Schweißbereich vollkommen überdecken. Die Enden des kurzen Elementes wirken mit den Enden der angrenzenden zwei langen Elemente über Winkel bzw. gewinkelte Flächen zusammen. Diese Winkel sind von einer solchen Größe, daß eine ausreichende Verminderung des Kreisumfangs der Unterlegelementanordnung bewirkt werden kann, wenn der Hub der Fluidkolbenstange leicht zurückgenommen wird, um so eine reibungsfreie Einführung und Herausnahme des Gerätes aus den Röhren zu ermöglichen. Die Segmente bestehen aus einer Spezialkupferlegierung oder keramischem Material für eine maximale wiederkehrende Verwendbarkeit und sind von aureichender Größe bzw. Dicke, d.h., weisen eine solche Körpermasse auf, daß sie die bei der Schweißung auftretende Hitze absorbieren können.

Im einzelnen sind in den Unterlegelementen zunächst eine zentrale Ausnehmung vorgesehen, die um den ganzen Umfang herumläuft, zur Aufnahme der Schweißnahtwurzel. Weiter sind aber auch, auf jeder Seite der zentralen Ausnehmung, je eine Ausnehmung vorgesehen, die gleichfalls um dem gesamten Umfang herumlaufen, zur Aufnahme von faserartigen wärmefesten Abdichtungen, die sich in ausreichendem Maß über die Oberfläche der Unterlegelemente erstrecken, um dicht mit den inneren Röhrenwänden zusammenzuwirken, wenn sich die Vorrichtung in ihrer expandierten Stellung befindet. Die Abdichtungen verhindern, daß das geschmolzene Schweißmaterial mit der Atmosphäre oder Bestandteilen der Atmosphäre aus dem Rohrinneren in Kontakt kommt, was kostspielige und aufwendige Reinigungsverfahren überflüssig macht, wenn rostfreier Stahl und Aluminium verschweißt werden.

Der zuvor schon mehrfach erwähnte Druckstempel der Druckeinrichtung oder sonstige geeignete Elemente der Druckeinrichtung sind in weiterer Ausgestaltung der Erfindung zur Zusammenwirkung mit einem Unterlegelement in Form eines das Unterlegelement zumindest teilweise umgreifenden Halterungsschuhs ausgebildet.

Bevorzugt sind zwei derartige Halterungsschuhe vorgesehen, zumindest bei einer Ausführung mit den zuvor erwähnten drei Unterlegelementen, die eine gebogene Gestalt aufweisen und etwa ein Viertel des inneren Röhrendurchmessers jeweils umfassen. Sie besitzen an ihrem äußeren Umfang eine rechtwinklige Ausnehmung zur Aufnahme der Unterlegelemente. Die Tiefe der Ausnehmung ist geringfügig kleiner als die Dicke der Unterlegelemente, um sicherzustellen, daß die dem Rohrinneren zugewandten Enden (im Querschnitt) der Halterungsschuhe einen Abstand zu der inneren Oberfläche des Rohres in der Betriebsstellung, also beim Andrücken der Unterlegelemente an die Rohrinnenfläche, aufweisen. Die Unterseite eines Halterungsschuhs weist eine flache Oberfläche auf, um Mittel aufzunehmen zur Befestigung der Führungsstangen und der Kolbenstange. Ein Halterungsschuh ist entweder ein Teil des Gehäuses der Fluidzylinders oder, aus Gründen der Austauschbarkeit, so ausgestaltet, daß er in die untere Kontur des Fluidzylindergehäuses hineinpaßt. Letztere Maßnahme ist insbesondere dann angewendet, wenn die Halterungsschuhe austauschbar sein sollen, wie das weiter oben auch schon erwähnt worden ist. Die Austauschbarkeit der Halterungsschuhe ist im übrigen ein weiteres, wesentliches Merkmal der Erfindung.

Wenn auch eine Schweißvorrichtung, wie sie zuvor beschrieben worden ist, grundsätzlich ohne weiteres verwendbar ist und die erwähnten Vorteile erbringt, so ist doch eine Unzulänglichkeit noch darin zu sehen, daß die Unterlegelemente mit der Druckeinrichtung nicht verbunden sind. Um hier Abhilfe zu schaffen, ohne das grundlegende Prinzipe der Erfindung zu verlassen, schlägt die Erfindung weiterhin vor, daß zur Einbringung der Vorrichtung in ein Rohrende ein die auf die Druckeinrichtung aufgebrachten Unterlegelemente zumindest teilweise außen umfassendes Klammerelement vorgesehen ist. Dieses Klammerelement kann im einzelnen in sehr verschiedener Weise ausgestaltet sein. So kann es nur an ausgewählten Stellen auf den Unterlegelementen aufsitzen oder etwa auch durchgehend auf den Unterlegelementen aufsitzen.

Dieses äußere Klammerelement ist wesentlich für eine genaue Anordnung der Schweißvorrichtung im Inneren der Rohrenden, für eine exakte Einstellung des Verbindungsspaltes und für eine genaue Ausrichtung der Ausnehmung zur Aufnahme der Schweißnaht bzw. der Schweißnahtwurzel relativ zu dem Verbindungsspalt. Das äußere Klammerelement mit diesen drei wichtigen Eigenschaften ist im Stand der Technik noch in keiner Weise bekannt. Da eine Fehlausrichtung der Ausnehmung der Unterlegelemente durch eine Verwendung dieses äußeren Klammerelementes ausgeschlossen ist, kann die Breite, Tiefe und insbesondere das Profil der Ausnehmung im Hinblick auf das geforderte Wurzelprofil der Schweißnaht genau eingestellt werden.

Das äußere Klammerelement sorgt also für eine genaue Positionierung des Gerätes in dem Rohrinneren, indem, wie weiter unten noch im einzelnen zu erläutert ist, die nur teilweise expandierte Unterleganordnung umfaßt wird, nämlich in der Ausnehmung und im Bereich der Ausnehmung des oder der Unterlegelemente. Sie besitzt im einzelnen zwei Schneiden, die die gleiche Breite haben wie der geforderte Verbindungsspalt und besitzt eine gekrümmte Gestaltung, wobei jede der Schneiden etwa ein Drittel des Gesamtumfanges der Röhren an gegenüberliegenden Anordnungen zueinander umfassen, wodurch die zwei losen Unterlegelemente fest gegen die Halterungsschuhe gehalten werden, nämlich in weiterer Ausgestaltung mittels einer federbelasteten Handhabe. Die zwei Schneiden sind gegenüberliegend zu der Handhabe gelenkig miteinander verbunden, um eine Anbringung und Entfernung der äußeren Klammer um die Unterlegelemente-Anordnung herum vornehmen zu können.

Ein weiteres bedeutendes Ziel der hier beschriebenen Erfindung, und eine demgemäße Ausgestaltung der Schweißvorrichtung ist es, eine Vielzahl von Spitzen in den Halterungsschuhen vorzusehen, die sich um ein Weniges über die äußeren Durchmesser der Unterelemente-Anordnung heraus erstrecken, wenn sie sich in ihrer expandierten Betriebsstellung befindet, wodurch eine Verminderung des Verbindungsspaltes in Querrichtung verhindert wird, nachdem mit der Schweißung begonnen worden ist. Ein Haftschweißverfahren oder dergleichen ist damit überflüssig. Es soll hierbei erwähnt werden, daß Haftschweißungen ein beträchtlicher Mißstand sind bei der nachfolgenden Aufbringung des Wurzelbettes, was eine erhebliche Anzahl von potentiellen Wurzelbettfehlern hervorruft.

Die hier beschriebene Erfindung ist gemäß einem weiteren Aspekt auch sehr vorteilhaft im Hinblick auf eine keramische Schweißunterlegung, die in vielen Fällen gewünscht oder gefordert ist und mit vielen Vorteilen verbunden ist. Hierzu können die Unterlegelemente so ausgebildet sein, daß sie aus zwei aufeinander steckbaren oder sonstwie trennbar verbundenen Teilen bestehen, einem Aufsteckschuh und einem Rückhalteschuh, die im Inneren eine Ausnehmung aufweisen zur Aufnahme einer Keramikunterlage, welche zur Unterlegung der Schweißnaht durch eine schlitzförmige Ausnehmung des an dem Rohrinneren anliegenden Aufsteckschuhs herausragt. Die Keramikunterlage kann in der Ausnehmung federnd aufgenommen sein, etwa mittels Unterlage eines Fiberglaspolsters. Ein derartiger Aufbau eines Unterlegelements, mit einer Keramikunterlage, kann sowohl kombinativ mit den weiteren zuvor erläuterten Merkmalen der Erfindung als auch selbständig von erfinderischer Bedeutung sein.

Weitere Einzelheiten der Erfindung ergeben sich aus der nachstehenden Beschreibung der beigefügten Zeichnung, die jedoch lediglich ein, wenn auch bevorzugtes, Ausführungsbeispiel der Erfindung darstellt. Im einzelnen zeigt auf der Zeichnung:

Fig. 1    eine Endansicht des Gerätes;

Fig. 2    eine teilweise Querschnittsansicht des Gerätes, geschnitten entlang der Linie A-A in Fig. 1;

Fig. 3    eine Querschnittsansicht eines Unterlegelementes und eines Halterungsschuhs, mit der Ausbildung mit Spitzen und Abdichtungen;

Fig. 4    eine Endansicht des äußeren Klammerelementes;

Fig. 5    eine schematische Darstellung der Unterlegelemente-Anordnung im Hinblick auf ihre Geometrie bei reduziertem Umfang;

Fig. 6    eine Querschnittsansicht entlang der Linie B-B in Fig. 2, nämlich die Anordnung des Transportmechanismus;

Fig. 7    das Verfahren beim Einbringen eines erfindungsgemäßen Gerätes;

Fig. 8    eine Darstellung zur Erläuterung des Herausnehmens eines erfindungsgemäßen Gerätes; und

Fig. 9    eine Querschnittsansicht eines erfindungsgemäßen Unterlegelementes mit Keramikunterlage.

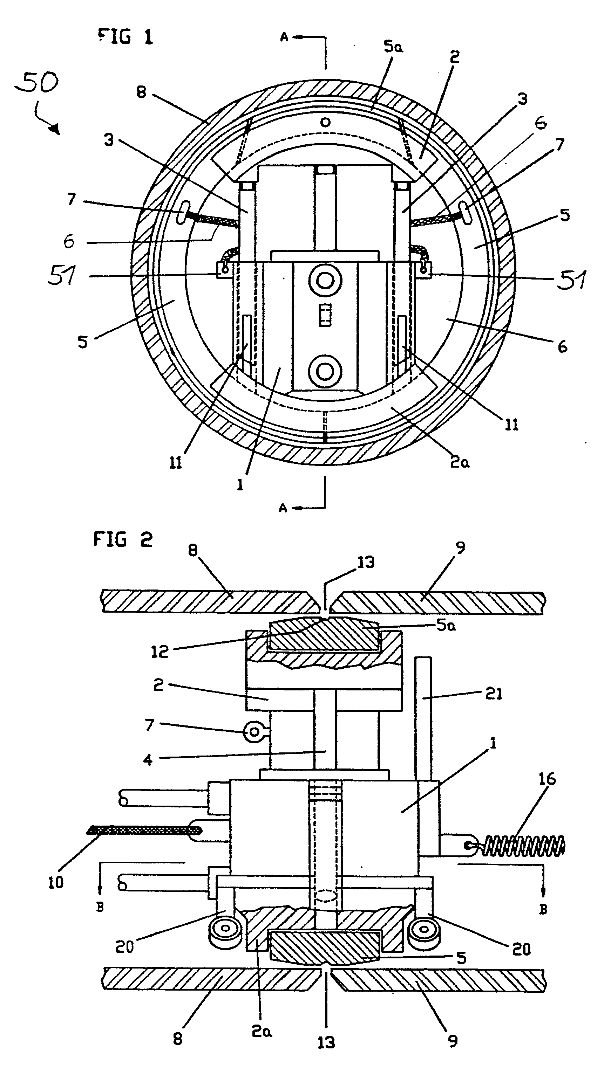

Dargestellt und beschrieben ist eine im ganzen mit 50 bezeichnete Schweißvorrichtung. Mit Bezug zunächst zu den Fig. 1 und 2 weist diese Schweißvorrichtung 50 einen doppelt wirkenden Zylinder 1 auf mit einem unteren Halterungsschuh 2a, der Teil des Fluidzylindergehäuses ist oder austauschbar an diesem befestigt ist, zusammen mit einem oberen Halterungsschuh 2 sowie eine Anordnung aus Unterlegelementen 5 und 5a. Führungsstangen 3 gewährleisten eine bewegliche Ausrichtung zwischen oberen und unteren Halterungsschuhen 2 und 2a. Eine Fluidkolbenstange 4 ist mit dem oberen Halterungsschuh 2 verbunden, um den oberen Halterungsschuh 2, der das mit ihm verbundene kurze Unterlegelement 5a trägt, auszufahren und zurückzuziehen. Die langen Unterlegelemente 5 rücken teilweise mit den oberen und unteren Halterungsschuhen 2, 2a zusammen, unter Bildung eines vollständigen Ringes. Alle drei Unterlegelemente 5 und 5a weisen eine zentral angeordnete flache Ausnehmung 12 entlang ihrem äußeren Umfang auf, zur Aufnahme des Schweißmaterials, das durch den Verbindungsspalt 13 hindurchdringt. Die Unterlegelemente 5 und 5a dienen desgleichen zur Abkühlung des Schweißmaterials, um eine Senkung oder Nachsackung des geschmolzenen Schweißbades zu verhindern, was insbesondere in der Überkopflage der Schweißverbindung von Bedeutung ist. Minimale Abstände zwischen den angrenzenden Unterlegelementen 5 und 5a sind erforderlich, um eine Eindringung von Schweißmaterial in die Verbindungen zu verhindern.

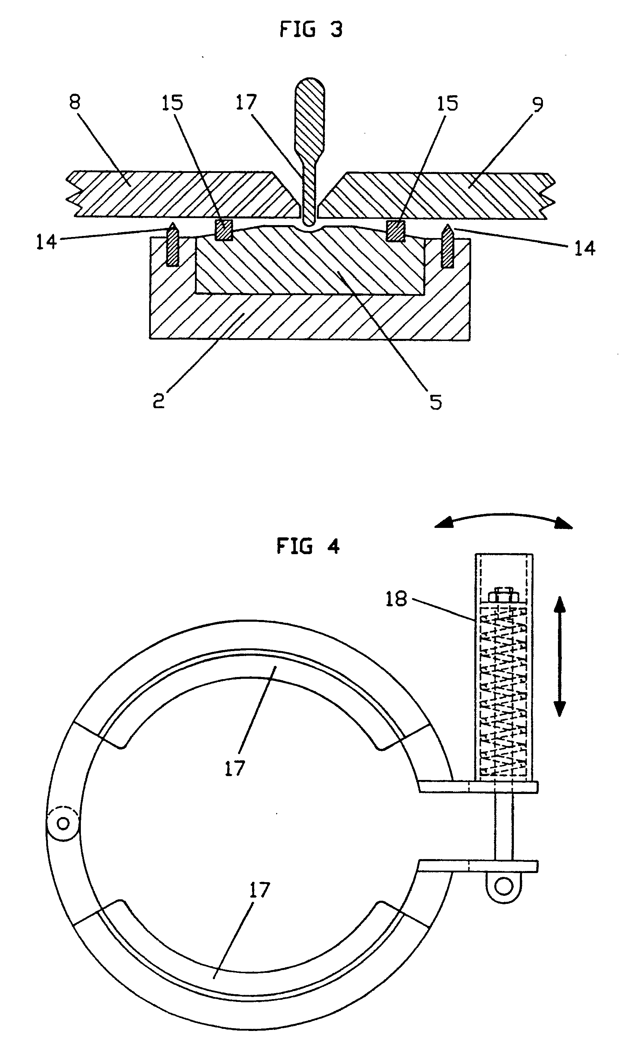

Fig. 3 zeigt eine weitere Einzelheit der genauen Ausgestaltung des Unterlegteils 5 in seiner Betriebsstellung in dem Halterungsschuh 2. Jeder Halterungsschuh 2 und 2a weist vier Spitzen 14 auf, entweder in Seitenwänden des Halterungsschuhs oder in gesonderten Aufnahmen. Diese Spitzen 14 erstrecken sich ausreichend über den Umfang der Unterlegelemente 5 und 5a hinaus, wenn diese sich in ihrer voll ausgefahrenen Betriebsstellung befinden. Die Spitzen 14 dringen leicht in die Seitenwände 8 und 9 ein und verhindern so eine Verringerung des Verbindungsspaltes 18, nachdem mit der Schweißung begonnen worden ist.

In Verbindung mit dem Auflagedruck der Unterlegelemente 5 und 5a gegen die inneren Rohrwandungen 8 und 9 machen die Spitzen 14 damit das Erfordernis eines Haftschweißverfahrens überflüssig. Bei der Verschweißung von rostfreiem Stahl und Aluminium werden in den Unterlegelementen 5 und 5a feuerfeste Faserabdichtungen 15 vorgesehen, um ein In-Kontakt-Kommen des geschmolzenen Schweißmaterials mit der Atmosphäre, aus dem Rohrinneren, zu verhindern, und ein kostspieliges inneres Reinigungsverfahren mit Argongas überflüssig zu machen.

Bei Einführung in ein Rohr 8 ist das Gerät vollständig zurückgezogen, bzw. eingefahren und nicht mit den langen Unterlegelementen 5 versehen. Ein geeignetes Spiralkabel 16 wird verwendet, um das Gerät, wie es beschrieben ist, durch das offene Rohrende 8 zu ziehen.

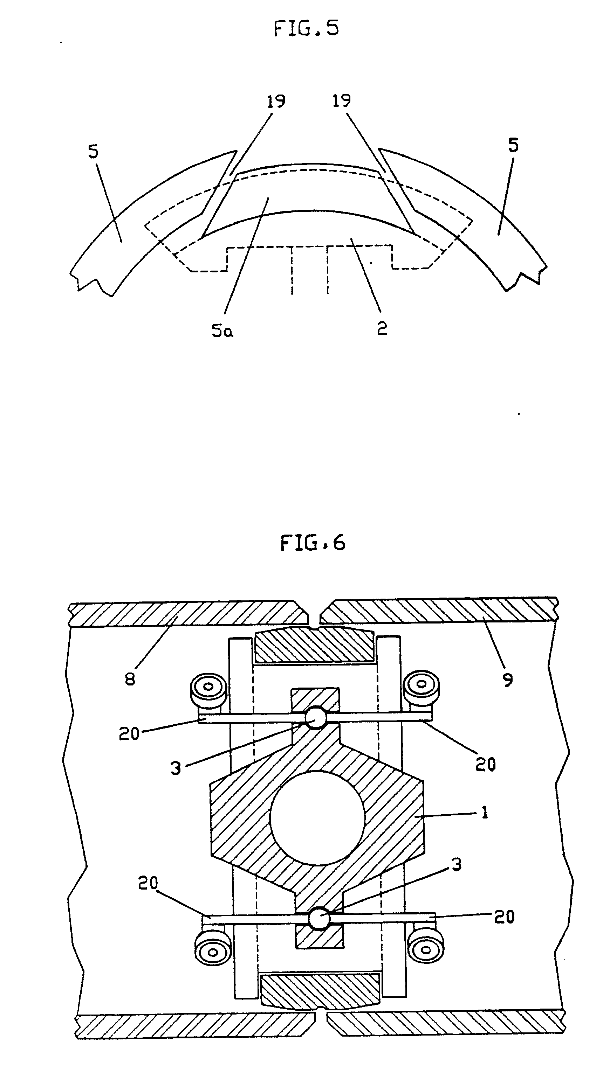

Mit Bezug nun zu Fig. 5 sind, bei teilweiser Expansion (etwas weniger als ein voller Hub), während in dem oberen Halterungsschuh 2 das kurze Unterlegelement 5a befestigt ist, die Unterlegelemente 5 in den Halterungsschuhen 2 und 2a positioniert und stoßen mit ihren Enden in der Mitte des unteren Halterungsschuhs 2a zusammen. Obere Bereiche der Unterlegelemente 5 wirken teilsweise an jeder Seite mit dem oberen Halterungsschuh 2 zusammen. Kabel 6 zum Herausziehen der Unterlegelemente 5 werden nun kreuzweise in die Aufnahmen 51 eingeführt. Nachdem die äußere Klammer um die Unterlegelemente-Anordnung herumgeführt ist und durch die federbelastete Handhabe 18 befestigt ist, sind die vorhandenen Spalte 19 zwischen den Unterlegelementen 5 und 5a geschlossen, wodurch sich die äußere kreisförmige Abmessung der Unterlegelemente-Anordnung 5 und 5a ausreichend vermindert für eine reibungsfreie Einführung in die Röhren 9 und 8.

Es sind also zwei Kabel 6 vorgesehen, zum Herausziehen der Unterlegelemente 5, die an den Seiten der Unterlegelemente 5 an ihrem oberen Bereich befestigt sind und die Mittel aufweisen für eine Einführung in Aufnahmen an der Seite des Fluidzylindergehäuses. Diese Kabel 6 weisen eine ausreichende Länge auf, um ein Herausziehen des Gerätes 50 aus den zwei langen Unterlegelementen 5 zu ermöglichen, die für eine gewisse Zeit (noch) in dem Schweißbereich verbleiben. Bei fortgesetztem Zug an der Fluidzylinderleine 10, zum Herausziehen, werden die Kabel 6 gespannt und befreien die zwei langen Unterlegelemente 5 aus dem Schweißbereich.

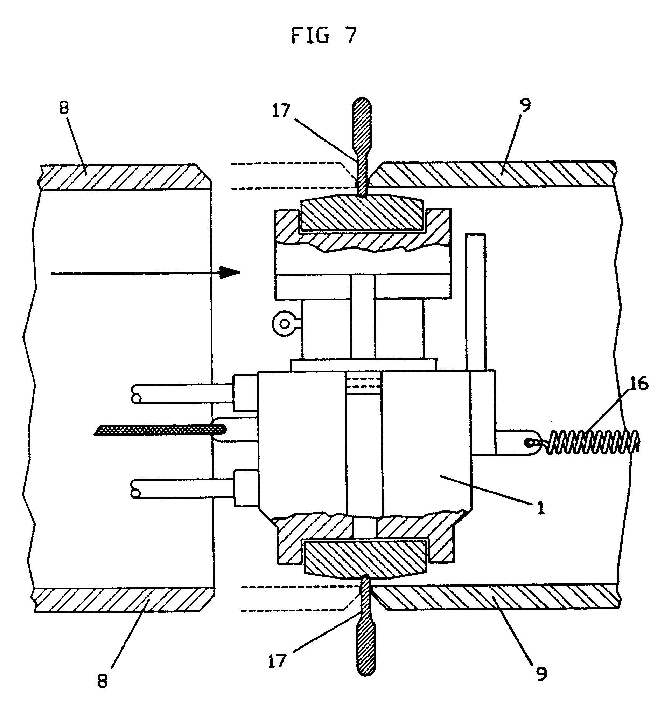

Mit Bezug zu den Fig. 4 und 7 ist dargestellt, wie das Gerät 50 in die Röhre 9 eingeführt wird, bis das Rohrende gegen die äußeren Schneiden 17 des Klammerelementes stößt. Das Rohr 8 wird über das Gerät 50 eingepaßt und gegen die andere Seite der äußeren Schneiden 17 des Klammerelementes geschoben.

Der Fluidzylinder 1 wird nun zu vollem Hub ausgefahren und ein Druck aufgebracht, der eine Zusammenwirkung der Spitzen 14 mit der inneren Rohrwandung bewirkt und die Unterlegelemente 5 und 5a nachgiebig gegen die Endflächen 8 und 9 der Röhren drückt. Das äußere Klammerelement wird sodann entfernt und es wird mit der Schweißung begonnen.

Nachdem eine oder mehrere Lagen aufgebracht sind, wird der Fluidzylinder 1 vollkommen eingefahren und zusammen mit dem Halterungsschuh 2a aus dem unteren Bereich der Unterlegelemente 5 herausgehoben. Bevor der Hub bzw. das Einfahren vollständig durchgeführt ist, wirkt die Lösestange 21 mit der oberen inneren Fläche der Röhre 9 zusammen und befreit den oberen Halterungsschuh 2, zusammen mit dem Unterlegelement 5a, von den angrenzenden Unterlegelementen 5. Ein Zug an der Fluidzylinderleine 10 trennt den Fluidzylinder 1 von den Unterlegelementen 5.

Mit Bezug nun zu den Fig. 1 und 6 ist zu erkennen, daß die Führung stangen 3, nachdem sie während der Zurückziehung nach unten bewegt worden sind, durch den unteren Halterungsschuh 2a vorstehen, was einen Wiedereintritt der Unterlegelemente 5 in die Ausnehmung des unteren Halterungsschuhs verhindert. Am Ende des Rückziehungshubes wirktder Transportmechanismus 20, der an den Führungsstangen 3 befestigt ist, sich erstreckend durch die Schlitze 11 in den Führungsstabführungen, mit dem Boden der Röhrenflächen 8 und 9 im Hinblick auf einen reibungslosen Transport zusammen. Die Kabel 6 zum Herausziehen der Unterlegelemente befreien die Unterlegelemente 5 von dem Schweißbereich und diese werden dann durch das Rohrinnere zusammen mit dem übrigen Gerät, wie es beschrieben ist, herausgeholt. Aus Gründen der Vereinfachung der Zeichnung sind die Spitzen 14, die Abdichtungen 15 und der Transportmechanismus 20 nur in den Fig. 3, 6 und 2 dargestellt.

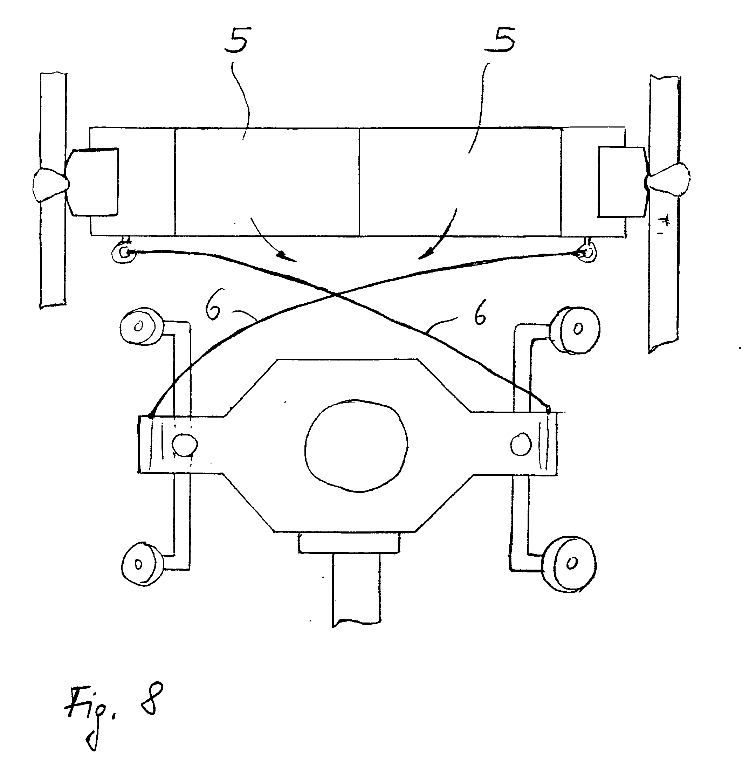

Das Herausziehen des erfindungsgemäßen Gerätes und insbesondere die kreuzweise Anschließung der Kabel 6 an den Unterlegelementen 5 ist in Fig. 8 zur Verdeutlichung nochmals gesondert dargestellt.

Bei dem erfindungsgemäßen Gerät sind also zwei Führungsstangen 3 vorgesehen, die an einem Ende an dem oberen Halterungsschuh 2 befestigt sind und frei entlang dem Zylinder 1 sich bewegen, wobei sie die zwei Halterungsschuhe in relativer Ausrichtung zueinander halten. Die Führungsstangen 3 sind von einer solchen Länge, daß sie bei dem unteren Hub bzw. bei dem Einziehhub des Fluidkolbens durch Öffnungen in die untere Halterungsschuhausnehmung vorstehen, und zwar so weit, bis sie mit dem äußeren Umfang der Halterungsschuh-Seitenwände abschließen, wodurch der Fluidzylinder 1 für ein axiales Herausziehen aus den Halterungsschuhen herausgehoben wird. Die Führungsstangen 3 sind mit dem Transportmechanismus 20 verschweißt, so daß der Transportmechanismus 20 sich bei einer Bewegung der Führungsstangen 3 zusammen mit diesen bewegt.

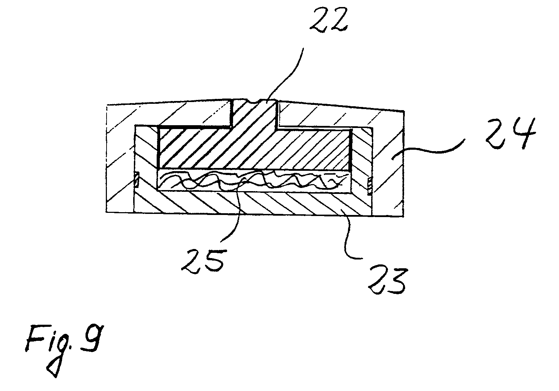

In Fig. 9 ist noch eine besondere, erfindungsgemäße Ausgestaltung eines Unterlegelementes 5 bzw. 5a dargestellt. Dieses Unterlegelement 5 bzw. 5a weist eine Keramikunterlage 22 auf. Dieses Unterlegelement 5 bzw. 5a und insbesondere die Keramikunterlage 22 ist so ausgestaltet, daß bei Verwendung eines solchen Unterlegelementes mit der Schweißnahtwurzel unmittelbar nur die Keramikunterlage 22 zusammenwirkt. Im einzelnen besteht ein derartiges Unterlegelement 5 bzw. 5a weiter aus einem Rückhalteschuh 23 und einem Aufsteckschuh 24, die jeweils, wie aus der Zeichnung ersichtlich, im Querschnitt im wesentlichen U-förmig ausgebildet sind. Der Aufsteckschuh 24 weist in seinem oberen, bei der Anwendung dem Rohrinneren zugeordneten Bereich eine schlitzförmige Ausnehmung auf, durch die hindurch sich ein halsartiger Teil der Keramikunterlage, zur unmittelbaren Anlage an den Schweißbereich, erstreckt. Wie zu erkennen ist besteht der Aufsteckschuh 24 eigentlich aus zwei Schuhteilen, die mit dem Rückhalteschuh 23 lösbar, bspw. etwa durch einen Aufsteckmechanismus, verbunden sein können. Die Keramikunterlage 22 ist in der durch den Aufsteckschuh 24 und den Rückhalteschuh 23 gebildeten Ausnehmung nachgiebig gelagert, bei dem dargestellten Ausführungsbeispiel mittels Zwischenlage eines Fiberglaspolsters 25. Ein derartiges Unterlegelement 5 bzw. 5a kann im Rahmen der Erfindung sowohl zusammen mit einer Vorrichtung, wie sie vorstehend im einzelnen beschrieben ist, verwendet werden, wie auch selbständig von Bedeutung sein.

Das Gerät weist weiterhin Elemente auf, die quer zu seiner Achse durch geeignete Schlitze 11 in dem Fluidzylindergehäuse vorstehen, welche Räder besitzen an ihren unteren Enden und mit den inneren, unteren Röhrenflächen zusammenwirken, kurz bevor der untere Hub bzw. der Einziehhub vervollständigt ist, so daß das Gerät über die innere Röhrenfläche angehoben wird, für einen reibungslosen Transport.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedensten Ausgestaltungen von Bedeutung sein.

Bezugszeichenliste

| 1 | Zylinder |
|---|---|
| 2 | Halterungsschuh (oberer) |
| 2a | Halterungsschuh (unterer) |
| 3 | Führungsstange |
| 4 | Fluidkolbenstange |
| 5 | Unterlegelement |
| 5a | Unterlegelement |
| 6 | Kabel |
| 8 | Rohr |
| 9 | Rohr |
| 10 | Fluidzylinderleine |
| 11 | Schlitze |
| 12 | Ausnehmung |
| 13 | Verbindungsspalt |
| 14 | Spitze |
| 15 | Faserabdichtung |
| 16 | Spiralkabel |
| 17 | Schneide |
| 18 | Handhabe |
| 19 | Spalt |
| 20 | Transportmechanismus |
| 21 | Lösestange |
| 22 | Keramikunterlage |
| 23 | Rückhalteschuh |
| 24 | Aufsteckschuh |
| 25 | Fiberglaspolster |
| 50 | Schweißvorrichtung |
| 51 | Aufnahme |

**Patentansprüche**

1. Schweißvorrichtung für eine Verwendung bei einer Verschweißung von aneinanderstoßenden Rohrenden, insbesondere von Rohrenden kleineren und mittleren Durchmessers, mit von innen anlegbaren Unterlegelementen (5, 5a) und einer aus- und einfahrbaren Druckeinrichtung zur Anpressung der Unterlegelemente, gekennzeichnet durch die folgenden Merkmale:

   - die Unterlegelemente (5, 5a) weisen Krümmungen auf, die denen der Rohre und Rohrkomponenten entsprechen
   - es git zumindest zwei (5, 5a) verschiedene Unterlegelemente mit unterschiedlicher Länge
   - die Gesamtheit der Unterlegelemente (5, 5a) deckt den Schweißbereich vollständig ab
   - die Druckvorrichtung weist einen oberen (2) und unteren (2a) Halterungsschuh zur lösbaren Aufnahme der Unterlegemente (5, 5a) auf
   - die Druckvorrichtung weist mindestens einen doppeltwirkenden Fluidzylinder (1) auf
   - der Fluidzylinder besitzt Führungen an seinen Seiten zur Aufnahme von Führungsstangen (3), die an einem Ende an dem oberen Halterungsschuh (2) befestigt sind,
   - die Druckvorrichtung weist einen bei Verfahren des Fluidzylinders mit der Rohrinnenseite zusammenwirkenden Anschlag in Form einer Lösestange (21) auf.

2. Schweißvorrichtung nach Anspruch 1, dadurch gekennzeichnet, daß die Halterungsschuhe (2, 2a) die Unterlegelemente (5, 5a) formschlüssig erfassen.

3. Schweißvorrichtung nach einem der Ansprüche 1 oder 2, wobei mindestens drei Unterlegelemente vorgesehen sind, dadurch gekennzeichnet, daß mindestens ein Unterlegelement (5a) an seinen Seiten im Umfangsrichtung keilartig abgeschrägt ist und daß die angrenzend mit diesem Unterlegelement (5a) zusammenwirkenden Unterlegelemente (5) entsprechend abgeschrägt sind.

4. Schweißvorrichtung nach Anspruch 1 oder 2, dadurch gekennzeichnet, daß der Halterungsschuh (2, 2a) austauschbar ist.

5. Schweißvorrichtung nach einem der vorhergehenden Ansprüche, dadurch gekennzeichnet, daß die Unterlegelemente (5, 5a) aus einer speziellen Kupferlegierung oder einer feuerfesten Keramik gebildet sind.

6. Schweißvorrichtung nach einem der Anspüche 1 bis 5, dadurch gekennzeichnet, daß zur Einbringung der Vorrichtung (50) in ein Rohrende (8, 9) ein die auf die Druckeinrichtung (1) aufgebrachten Unterlegelemente (5, 5a) zumindest teilweise außen umfassendes Klammerelement vorgesehen ist.

7. Schweißvorrichtung nach einem der vorhergehenden Ansprüche, dadurch gekennzeichnet, daß zumindest ein Teil der Unterlegelemente (5) mittels Zugmittel (6) zur Herausziehung der Unterlegelemente (5) mit der Druckvorrichtung verbunden sind.

8. Schweißvorrichtung nach einem oder mehreren der vorhergehenden Ansprüche, dadurch gekennzeichnet, daß die zwei Halterungsschuhe (2, 2a) eine gebogene Gestaltung besitzen, die sich über etwa ein Viertel des inneren Röhrenumfanges jeweils erstreckt, daß sie eine rechtwinklige Ausnehmung in ihrem äußeren Umfang besitzen, zur Aufnahme der Unterlegelemente (5, 5a), daß die Tiefe der Ausnehmung um ein Weniges geringer ist als die Dicke der Unterlegelemente (5, 5a), um einen Abstand der Seitenwände der Halterungsschuhe (2, 2a) zu der inneren Röhrenoberfläche in der Betriebsstellung sicherzustellen, daß die Unterseite eines Halterungsschuhs (2) eine flache Fläche aufweist, um Mittel aufzunehmen zur Befestigung der Führungsstangen (3) und der Kolbenstange (4), und daß ein Halterungsschuh (2a) entweder ein Teil des Fluidzylindergehäuses ist oder, aus Gründen der Auswechselbarkeit, so gestaltet ist, daß er in die Kontur des Fluidzylinderhäuses hineinpaßt.

9. Schweißvorrichtung nach einem oder mehreren der vorhergehenden Ansprüche, dadurch gekennzeichnet, daß zwei Führungsstangen (3) an einem Ende des oberen Halterungsschuhs (2) befestigt sind, daß sie frei entlang dem Fluidzylinder (1) gleiten können und die zwei Halterungsschuhe (2, 2a) in relativer Ausrichtung zueinander halten, wobei sie von einer solchen Länge sind, daß bei dem unteren Hub des Fluidkolbens sie durch Öffnungen in die Ausnehmung des unteren Halterungsschuhs vorstehen, bis sie mit dem äußeren Umfang der Seitenwände des Halterungsschuhs abgrenzen, wodurch der Fluidzylinder (1) aus dem Halterungsschuh (2a) herausgehoben wird, für eine axiale Herausziehung.

10. Schweißvorrichtung nach Anspruch 1, dadurch gekennzeichnet, daß Mittel vorgesehen sind, eine Lösestange (21) aufzunehmen, die mit der oberen Röhrenfläche zusammenwirkt, mittig in Beziehung zu dem oberen Halterungsschuh (2) und vorne oder oberhalb in Bezug auf den unteren Hub des Fluidkolbens, und daß die Wirkung dessen den oberen Halterungsschuh (2) aus den zwei angrenzenden Unterlegelementen (5) befreit.

11. Schweißvorrichtung nach einem oder mehreren der vorhergehenden Ansprüche, dadurch gekennzeichnet, daß zwei Kabel (6) zur Herausziehung der zwei Unterlegelemente (5) vorgesehen sind, befestigt an den Seiten der Unterlegelemente an deren oberen Bereich, und aufweisend Mittel zur Einfügung in Aufnahmen an der Seite des Fluidzylindergehäuses, daß sie von ausreichender Länge sind, um eine Herausziehung des Gerätes aus den zwei unterlegelementen (5) zu ermöglichen, welche zeitweise an der Schweißstelle verbleiben, und daß eine fortgeführte Herausziehung an der Fluidzylinderleine (10) die Kabel (6) spannt und die zwei Unterlegelemente (5) aus dem Schweißbereich herauszieht.

12. Schweißvorrichtung nach Anspruch 9, dadurch gekennzeichnet, daß, daran befestigt, vorstehende Stützen quer zu der Achse vorgesehen sind und durch geeignete Schlitze (11) in dem Fluidzylindergehäuse gehen, und daß sie Räder an ihren unteren Enden besitzen zur Zusammenwirkung mit der inneren, unteren Röhrenfläche, kurz bevor der untere Hub vervollständigt ist, wodurch die Vorrichtung (50) über die innere Röhrenfläche angehoben wird, für einen reibungslosen Transport.

13. Schweißvorrichtung nach Anspruch 1, dadurch gekennzeichnet, daß drei Unterlegelemente (5, 5a) unterschiedlicher Länge vorgesehen sind, die den Schweißbereich vollständig abdecken, daß die Enden des kurzen Elementes (5a) mit den Enden der angrenzenden zwei langen Elemente (5) über Winkelflächen zusammenwirken, daß die Winkelflächen eine solche Größe bzw. Neigung aufweisen, daß eine ausreichende Verkleinerung der Kreisabmessung bzw. des Kreisdurchmessers der Unterlegelemente-Anordnung (5, 5a) bewirkt wird bei leicht abgesenktem Hub der Fluidkolbenstange, um eine reibungsfreie Einführung der beschriebenen Vorrichtung (50) in die Röhren zu ermöglichen, daß die Unterlegelemente (5, 5a) aus einer speziellen Kupferlegierung oder einem keramischen Material bestehen, für eine maximal mögliche wiederholte Verwendung, und daß sie eine ausreichend große Körpermasse aufweisen, um die bei dem Schweißvorgang erzeugte Wärmemenge zu absorbieren.

14. Schweißvorrichtung nach Anspruch 13, dadurch gekennzeichnet, daß Ausnehmungen auf jeder Seite der mittleren Ausnehmung (12) eines Unterlegelementes vorgesehen sind, die sich über den gesamten Umfang erstrecken, für eine Aufnahme von fasrigen feuerfesten Abdichtungen, die sich in ausreichendem Maße über die Oberfläche der Unterlegelemente (5, 5a) erstrecken, um mit den inneren Röhrenwänden zusammenzuwirken, wenn die Vorrichtung sich in ihrer ausgefahrenen Stellung befindet, daß die Abdichtungen (15) einen Kontakt mit Bestandteilen der Atmosphäre, vom Inneren der Röhre her, mit geschmolzenem Schweißmaterial verhindern wodurch kostspielige und aufwendige Reinigungsverfahren wegfallen, bei der Verschweißung von rostfreiem Stahl oder Aluminium.

15. Schweißvorrichtung nach Anspruch 1, dadurch gekennzeichnet, daß ein äußeres Klammerelement verwendet wird, welches eine genaue Positionierung der Vorrichtung (50) in dem Rohrinneren erbringt, in dem die teilweise ausgefahrene Unterlegelemente-Anordnung (5, 5a) umfaßt wird in und im Bereich der Ausnehmung der Unterlegelemente, daß das Klammerelemente zwei Schneiden (17) aufweist, die die gleiche Breite haben wie der verbindungsspalt, der gefordert ist und daß sie eine gebogene Gestaltung haben, die jeweils etwa ein Drittel des Gesamtumfangs der Röhren (8, 9) umfaßt und einander gegenüber angeordnet sind, daß sie die zwei losen Unterlegelemente (5) fest in den Halterungsschuhen (2, 2a) halten, mit Hilfe einer federbelasteten Handhabe, und daß die Schneiden (17) gegenüber der Handhabe gelenkig verbunden sind, um eine Anbringung und ein Lösen des äußeren Klammerelementes in Bezug auf die Unterlegelemente-Anordnung zu ermöglichen.

16. Schweißvorrichtung nach einem oder mehreren der vorhergehenden Ansprüche in Kombination mit einem Unterlegelement, dadurch gekennzeichnet, daß ein im Querschnitt im wesentlichen U-förmiger Rückhalteschuh (23) und ein im Querschnitt im wesentlichen U-förmiger Aufsteckschuh (24) vorgesehen ist, die so miteinander zu verbinden sind, daß in einer zwischen ihnen gebildeten Ausnehmung eine Keramikunterlage (22) aufnehmbar ist.

17. Schweißvorrichtung nach Anspruch 16, dadurch gekennzeichnet, daß der Aufsteckschuh (24) in seinem bei Verwendung mit einer Rohrunterseite zusammenwirkenden Bereich eine schlitzförmige Ausnehmung aufweist, durch welche ein halsartiger Bereich der Keramikunterlage (22) hindurchsteckbar ist, zur unmittelbaren Zusammenwirkung mit einem Schweißnahtbereich.

18. Schweißvorrichtung nach einem der Ansprüche 16 oder 17, dadurch gekennzeichnet, daß die Keramikunterlage (22) in der durch den Aufsteckschuh (24) und den Rückhalteschuh (23) gebildeten Ausnehmung nachgiebig federnd gelagert ist, durch Unterlegung eines Fiberglaspolsters (25).

**Claims**

1. A welding device for use in welding abutting pipe ends, more particularly relatively small and average diameter pipe ends, comprising backing elements (5, 5a) adapted to be applied from the inside, and an extensible and retractable pressure device for pressing the backing elements into contact, characterised by the following features:

   the backing elements (5, 5a) have curvatures corresponding to those of the pipes and pipe components

   there are at least two (5, 5a) different backing elements with different lengths

   the backing elements (5, 5a) together completely cover the welding zone

the pressure device comprises a top mounting shoe (2) and a bottom mounting shoe (2a) for releasibly receiving the backing elements (5, 5a)

the pressure device comprises at least one double-acting fluid cylinder (1)

the fluid cylinder has guides at its sides to receive guide rods (3) secured at one and to the top mounting shoe (2)

the pressure device comprises an abutment in the form of a release rod (21) which cooperates with the inside of the pipe during the traversing of the fluid cylinder.

2.  A welding device according to claim 1, characterised in that the mounting shoes (2, 2a) engage the backing elements (5, 5a) positively.

3.  A welding device according to claim 1 or 2, in which at least three backing elements are provided, characterised in that at least one backing element (5a) is bevelled in the form of a wedge peripherally at its sides and in that the backing elements (5) adjacently cooperating with this backing element (5a) are bevelled correspondingly.

4.  A welding device according to claim 1 or 2, characterised in that the mounting shoe (2, 2a) is replaceable.

5.  A welding device according to any one of the preceding claims, characterised in that the backing elements (5, 5a) are formed from a special copper alloy or a refractory ceramic.

6.  A welding device according to any one of claims 1 to 5, characterised in that a clamp element at least partially externally surrounding the backing elements (5, 5a) applied to the pressure device (1) is provided for introducing the device (50) into a pipe end (8, 9).

7.  A welding device according to any one of the preceding claims, characterised in that at least some of the backing elements (5) are connected to the pressure device by traction means (6) for withdrawing the backing elements (5).

8.  A welding device according to one or more of the preceding claims, characterised in that the two mounting shoes (2, 2a) have a curved configuration which extends over appproximately one quarter of the inner pipe periphery in each case, in that they have a rectangular recess in their outer periphery to receive the backing elements (5, 5a), in that that the depth of the recess is slightly smaller than the thickness of the backing elements (5, 5a) in order to ensure that the side walls of the mounting shoes (2, 2a) are spaced from the inner pipe surface in the operative position, in that the underside of a mounting shoe (2) his a flat surface to receive means for fixing the guide rods (3) and the piston rod (4), and in that a mounting shoe (2a) is either a part of the fluid cylinder housing or, for reasons of replaceability, is so devised as to fit into the contour of the fluid cylinder housing.

9.  A welding device according to one or more of the preceding claims, characterised in that two guide rods (3) are secured to one end of the top mounting shoe (2), in that they can slide freely along the fluid cylinder (1) and hold the two mounting shoes (2, 2a) in relative alignment to one another, being of a length such that on the bottom stroke of the fluid piston they project through apertures into the recess in the bottom mounting shoe until they border the outer periphery of side walls of the mounting shoe, so that the fluid cylinder (1) is lifted out of the mounting shoe (2a) for axial withdrawal.

10. A welding device according to claim 1, characterised in that means are provided to receive a release rod (21) which cooperates with the top pipe surface, centrally in relation to the top mounting shoe (2) and forwardly or above with respect to the bottom stroke of the fluid piston, and in, that the action thereof releases the top mounting shoe (2) from the two adjoining backing elements (5).

11. A welding device according to one or more of the preceding claims, characterised in that two cables (6) are provided to withdraw the two backing elements (5), secured to the sides of the backing elements at the top zone thereof, and comprising means for insertion into recesses at the side of the fluid cylinder housing, in that they are of a sufficient length to allow withdrawal of the device from the two backing elements (5) which temporarily remain at the weld, and in that continued withdrawal at the fluid cylinder line (10) tensions the cable (6) and withdraws the two backing elements (5) from the welding zone.

12. A welding device according to claim 9, characterised in that secured thereto projecting supports are provided transversely of the axis and pass through suitable slots (11) in the fluid cylinder housing, and in that they have wheels at their bottom ends for cooperation with the inner bottom pipe surface just before the bottom stroke is completed, so that the device (50) is lifted over the inner pipe surface for friction-less transport.

13. A welding device according to claim 1, characterised in that three backing elements (5, 5a) of different lengths are provided, which completely cover the welding zone, in that the ends of the short element (5a) cooperate with the ends of the adjoining two long elements (5) by way of angular surfaces, in that the angular surfaces have a size or inclination such as to provide adequate reduction of the size of the circle or diameter of the circle of the backing element arrangement (5, 5a) with a slightly lowered stroke of the fluid piston rod in order to allow friction-free introduction of the described device (50) into the pipes, in that the backing elements (5, 5a) consist of a special copper alloy or a ceramic material, for the maximum possible repeated use, and in that they have a sufficiently large body mass to absorb the amount of heat generated during the welding operation.

14. A welding device according to claim 13, characterised in that recesses are provided on each side of the central recess (12) of a backing element, and extend over the entire periphery, to receive fibrous refractory seals, which extend adequately over the surface of the backing elements (5, 5a) to cooperate with the inner pipe walls when the device is in its extended position, in that the seals (15) prevent any contact with constituents of the atmosphere, from the inside of the pipes, with molten welding material, thus eliminating expensive and complex cleaning processes in the welding of stainless steel or aluminium.

15. A welding device according to claim 1, characterised in that an outer clamp element is used which provides exact positioning of the device (50) in the interior of the pipe, in which the partially extended backing element arrangement (5, 5a) is surrounded in and in the region of the recess of the backing elements, in that the clamp element has two knife edges (17) which have the same width as the connecting gap required and in that they have a curved configuration in each case covering approximately one-third of the total periphery of the pipes (8, 9) and are arranged opposite one another, in that they hold the two loose backing elements (5) firmly in the mounting shoes (2, 2a) by means of a spring-loaded handle, and in that the knife edges (17) are pivotally connected with respect to the handle to allow application and release of the outer clamp element with respect to the backing element arrangement.

16. A welding device according to one or more of the preceding claims, in combination with a backing element, characterised in that a retaining shoe (23) of substantially U-shaped cross-section and a push-on shoe (24) of substantially U-shaped cross-section are provided and are adapted to be so interconnected that a ceramic washer (22) is receivable in a recess formed between them.

17. A welding device according to claim 16, characterised in that the push-on shoe (24) has, in its zone cooperating with the underside of a pipe during use, a recess in the form of a slot through which there is pushable a zone of the ceramic washer (22) in the form of a neck, for direct cooperation with a weld seam zone.

18. A welding device according to claim 16 or 17, characterised in that the ceramic washer (22) is mounted resiliently in the recess formed by the push-on shoe (24) and the retaining shoe (23) by a backing means in the form of a fibre glass cushion (25).

**Revendications**

1. Dispositif auxiliaire de soudage pour utilisation dans le soudage d'extrémités de tubes contiguës, en particulier d'extrémités de tubes de petit ou moyen diamètre, comportant des éléments de support (5, 5a) applicables de l'intérieur et un dispositif de pression sortable et rentrable pour la serrage de ces éléments de support, caractérisé par les caractéristiques suivantes :
   - les éléments de support (5, 5a) présentent des courbures qui correspondent à celles des tubes et des éléments de tubes,
   - il existe au moins deux (5, 5a) éléments de support différents de longueur différente,
   - l'ensemble des éléments de support (5, 5a) couvre entièrement la zone de soudage,
   - le dispositif de pression présente un sabot de fixation supérieur (2) et un sabot de fixation inférieur (2a) pour le montage amovible des éléments de support (5, 5a),

- le dispositif de pression présente au moins un vérin à double effet (1),
- ce vérin possède sur ses côtés des guidages destinés à recevoir des tiges de guidage (3) qui sont fixées à une extrémité au sabot de fixation supérieur (2) et
- le dispositif de pression présente une butée formée d'une tige de dégagement (21) qui, lors du déplacement du vérin, coopére avec la face intérieur du tube.

2. Dispositif auxiliaire de soudage selon la revendication 1, caractérisé par le fait que les sabots de fixation (5, 5a) s'emboîtent sur les éléments de support (5, 5a).

3. Dispositif auxiliaire de soudage selon l'une des revendications 1 et 2, dans lequel sont prévus au moins trois éléments de support, caractérise par le fait qu'au moins un éléments de support (5a) est, sur ses côtés, biseauté en coin dans la direction circonférentielle et que les éléments de support (5) coopérant, contigus, avec cet élément de support (5a), sont biseautés de manière correspondante.

4. Dispositif auxiliaire de soudage selon l'une des revendications 1 et 2, caractérisé par le fait que le sabot de fixation (2, 2a) peut étre changé.

5. Dispositif auxiliaire de soudage selon l'une des revendications précédentes, caractérisé par le fait que les éléments de support (5, 5a) sont en alliage de cuivre spécial ou en céramique réfractaire.

6. Dispositif auxiliaire de soudage selon l'une des revendications 1 à 3, caractérisé par le fait que pour la mise en place du dispositif (50) dans une extrémité de tube (8, 9), est prévu un élément pince enserrant extérieurement au moins en partie les éléments de support (5, 5a) appliqués sur le dispositif de pression (1).

7. Dispositif auxiliaire de soudage selon l'une des revendications précédentes, caractérisé par le fait qu'au moins une partie des éléments de support (5) sont reliés au dispositif de pression par des moyens de traction (6) pour l'extraction des éléments de support (5).

8. Dispositif auxiliaire de soudage selon une ou plusieurs des revendications précédentes, caractérisé par le fait que les deux sabots de fixation (2, 2a) ont une forme courbe qui s'étend sur à peu près le quart de la circonférence intérieure des tubes, qu'ils ont sur leur pourtour extérieur un évidement rectangulaire destine à recevoir les éléments de support (5, 5a), que la profondeur de cet évidement est un peu inférieure à l'épaisseur des éléments de fixation (5, 5a) pour assurer en position de fonctionnement un écartement des parois latérales des sabots de fixation (2, 2a) de la surface intérieure des tubes, que le dessous d'un sabot de fixation (2) présente une face plane pour recevoir des moyens de fixation des tiges de guidage (3) et de la tige de piston (4), et qu'un sabot de fixation (2a) soit est une partie du corps du vérin, soit, pour des raisons d'interchangeabilité, est fait de façon à s'ajuster dans le contour du corps du vérin.

9. Dispositif auxiliaire de soudage selon une ou plusieurs des revendications précédentes, caractérisé par le fait que deux tiges de guidage (3) sont fixées à une extrémité du sabot de fixation supérieur (2), qu'elles peuvent glisser librement le long du vérin (1) et maintiennent les deux sabots de fixation (2, 2a) alignés l'un par rapport à l'autre, ces tiges étant de longueur telle que lors de la course inférieure du piston, elles s'avancent par des ouvertures dans l'évidement du sabot de fixation inférieur jusqu'à ce qu'elles délimitent d'avec le pourtour extérieur des parois latérales du sabot de fixation, de sorte que le vérin (1) est sorti du sabot de fixation (2a) pour une extraction axiale.

10. Dispositif auxiliaire de soudage selon la revendication 1, caractérisé par le fait qu'il est prévu des moyens de réception d'uns tige de dégagement (21) qui coopère avec la surface supérieure des tubes, au milieu, relativement au sabot de fixation supérieur (2) et en avant et au-dessus, relativement à la course inférieure du piston, et que l'action de celui-ci dégage le sabot de fixation supérieur (2) des deux éléments de support contigus (5).

11. Dispositif auxlliaire de soudage selon une ou plusieurs des revendications précédentes, caractérisé par le fait que pour l'extraction des deux éléments de support (5) sont prévus deux câbles (6) qui sont fixés sur les côtés de ces éléments à la partie supérieure de ceux-ci et présentent des moyens d'encastrement dans des logements prévus sur le côté du corps du vérin, que ces câbles sont de longueur suffisante pour permettre l'extraction de l'appareil des deux éléments de support (5), qui restent par moments à l'endroit de soudage, et qu'une extraction prolongée à la corde (10) du vérin tend les câbles (6) et extrait les deux éléments de support (5) de la zone de soudage.

12. Dispositif auxiliaire de soudage selon la revendication 9, caractérisé par le fait que des supports saillants fixés à lui sont prévus perpendiculairement à l'axe et passent par des fentes appropriées (11) du corps du vérin, et que ces supports ont à leur extrémité inférieure des roues destinées à coopérer avec la surface inférieure intérieure des tubes peu avant que la course intérieure soit achevée, de sorte que le dispositif (50) est soulevé au-dessus de la face intérieure des tubes pour un transport sans frottement.

13. Dispositif auxiliaire de soudage salon la revendication 1, caractérisé par le fait qu'il est prévu trois éléments de support (5, 5a) de longueurs différentes qui couvrent entièrement la zone de soudage, que les extrémités de l'élément court (5a) coopèrent avec les extrémités des deux éléments longs contigus (5) par des surfaces d'angle, que ces surfaces d'angle ont une grandeur ou une inclinaison telle que soit produite une diminution suffisante de la dimension du cercle ou du diamètre du cercle du système d'éléments de support (5, 5a) avec une course légèrement baissée de la tige du piston pour permettre une introducjtion sans frottement du dispositif décrit (50) dans les tubes, que les éléments de support (5, 5a) sont en alliage de cuivre spécial ou en matériau céramique pour une utilisation répétée maximale possible, et qu'ils ont une masse corporelle suffisamment grande pour absorber la chaleur produite lors du soudage.

14. Dispositif auxiliaire de soudage selon la revendication 13, caractérisé par le fait que de chaque côté de l'évidement médian (12) d'un élément de support sont prévus des évidements s'étendant sur tout le pourtour destinés à recevoir des moyens d'étanchéité réfractaires fibreux qui s'étendent suffisamment sur la surface des éléments de support (5, 5a) pour coopérer avec la paroi intérieure des tubes quand le dispositif est en position sortie, que ces moyens d'étanchéité (15) empêchent un contact avec les éléments de l'atmosphère, depuis l'intérieur des tubes, avec la matière de soudage fondue, ce qui évite des opérations de nettoyage coûteuses et compliquées, dans le cas du soudage d'acier inoxydable ou d'aluminium.

15. Dispositif auxiliaire de soudage selon la revendication 1, caractérisé par le fait qu'il est utilisé un élément pince extérieur qui donne un positionnement exact du dispositif (50) à l'intérieur du tube, où lu système d'éléments du support (5, 5a) partiellement sorti est enserré, et dans la zone de l'évidement des éléments de support, que cet élément pince présente deux tranchants (17) qui ont la même largeur que la fente du liaison exigée et que ceux-ci ont une forme courbe qui couvre à peu près le tiers de la circonférence totale des tubes (8, 9) et sont placés les uns en face des autres, qu'ils tiennent solidement les deux éléments de support libres (5) dans les sabots de fixation (2, 2a), à l'aide d'une manette à ressort, et que les tranchants (17) sont joints à cette manette par articulation pour permettre l'application et le dégagement de l'élément pince extérieur par rapport au système d'éléments de support.

16. Dispositif auxiliaire de soudage selon une ou plusieurs des revendications précédentes en combinaison avec un élément de support, caractérisé par le fait qu'il est prévu un sabot de retenue à section sensiblement en U (23) et un sabot rapportable à section en U (24) qui sont destinés à être assemblés de façon qu'un support en céramique (22) puisse être logé dans un évidement formé entre eux.

17. Dispositif auxiliaire de soudage selon la revendication 16, caractérisé par le fait que le sabot rapportable (24) présente, dans sa zone coopérant avec un dessous de tube lors de l'utilisation, un évidement en forme de fente par lequel peut être passée une partie, du genre col, du support en céramique (22), pour la coopération directe avec une zone de cordon de soudure.

18. Dispositif auxiliaire de soudage selon l'une des revendications 16 et 17, caractérisé par le fait que le support en céramique (22) est monté élastiquement, par placement dessous d'un coussin en fibres de verre (25), dans l'évidement formé par le sabot rapportable (24) et le sabot de retenue (23).

FIG 1

50

FIG 2

14

FIG 3

FIG 4

# FIG.5

# FIG.6

## FIG 7

Fig. 8

Fig. 9